# FASCICULE DE BREVET EUROPEEN

(11) **EP 3 107 023 B1**
(45) Date de publication et mention de la délivrance du brevet: **01.05.2019**
(21) Numéro de dépôt: 16174471.9
(22) Date de dépôt: 14.06.2016
(51) Int. Cl.: G06F 21/44, G06Q 20/40, H04W 12/06, G06Q 20/32, G06Q 20/20, H04L 9/32

(54) **PROCÉDÉ, DISPOSITIF ET PROGRAMME D'AUTHENTIFICATION SANS FIL D'UN TERMINAL DE PAYMENT**
VERFAHREN, VORRICHTUNG UND PROGRAMM ZUR DRAHTLOSEN AUTHENTIZIERUNG EINEN ZAHLUNGSTERMINAL
METHOD, DEVICE AND PROGRAM FOR WIRELESS PAYMENT TERMINAL AUTHENTICATION

(30) Priorité: 15.06.2015 FR 1555434
(43) Date de publication de la demande: 21.12.2016
(73) Titulaire: Ingenico Group, 75015 Paris (FR)
(72) Inventeur: MAYER, Laurent, 95800 Courdimanche (FR)
(74) Mandataire: Vidon Brevets & Stratégie

(56) Documents cités:
- WO-A1-2014/104436
- Martin Emms ET AL: "COMPUTING SCIENCE POS Terminal Authentication Protocol to Protect EMV Contactless Payment Cards", , 1 novembre 2013 (2013-11-01), XP055254271, Extrait de l'Internet: URL:http://eprint.ncl.ac.uk/file_store/pro duction/205885/20858CB6-4BF6-4E80-A9E5-42C AAD2EA27D.pdf [extrait le 2016-03-01]
- "PRODUCT SPEC SHEET BLUETOOTH MONITORING INTRODUCING THE WORLD'S FIRST MULTI-RF MONITORING SOLUTION", , 30 mars 2014 (2014-03-30), XP055254529, Extrait de l'Internet: URL:https://www.zebra.com/us/en/products/s oftware/wlan-systems/wlan-management-and-s ecurity-software/airdefense-infrastructure -management/airdefense_bluetooth.pdf [extrait le 2016-03-02]
- Wireless Special Interest Group (sig) Pci Security Standards Council: "Information Supplement: PCI DSS Wireless Guidelines Standard: PCI Data Security Standard (PCI DSS)", , 25 August 2011 (2011-08-25), XP055423486, Retrieved from the Internet: URL:https://www.pcisecuritystandards.org/p dfs/PCI_DSS_v2_Wireless_Guidelines.pdf [retrieved on 2017-11-09]

## Description

### 1. Domaine de l'invention

Le domaine de l'invention est celui des terminaux de paiement électroniques, et plus précisément des terminaux de paiement portables, ou mobiles, déployés dans un commerce.

Plus particulièrement, l'invention concerne la sécurisation de tels terminaux de paiement.

### 2. Art Antérieur

Les terminaux de paiement font l'objet de nombreuses tentatives d'attaques. En effet, de par la nature des informations qu'il contient et de par la sensibilité des données qu'il traite, le terminal de paiement est un objet qui possède une grande valeur pour des personnes malveillantes.

Un certain type de fraude tend à prendre de l'ampleur : il s'agit de substituer un terminal de paiement authentique par un terminal de paiement frauduleux. Le terminal de paiement authentique est subtilisé dans un commerce et immédiatement remplacé par un terminal de paiement qui présente une apparence de validité, mais qui en réalité a été modifié, par exemple en intégrant au terminal un programme frauduleux permettant de lire le moyen de paiement du client et d'en capturer les informations, de façon à pouvoir utiliser ces informations acquises pour effectuer des transactions à l'insu du client. La procédure de paiement est classique pour le commerçant et le client, puisqu'un faux ticket de reçu est également imprimé. Toutefois, le fraudeur récupère les informations de paiement du client et peut donc effectuer des transactions sans que ce dernier ne s'en rende compte. Une telle situation peut donc induire des pertes financières importantes pour ce dernier. Ce type de fraude peut également être effectuée en introduisant un terminal frauduleux dans un parc de terminaux de paiement existant.

Une solution pour résoudre ce problème de substitution et/ou d'introduction peut consister en l'application d'un marquage sur le terminal. Un tel marquage permet au commerçant de se rendre compte de la substitution de son terminal. Cette technique est efficace à partir du moment où le fraudeur n'est pas lui-même en mesure de reproduire ce marquage. Cette technique est donc limitée par la capacité du fraudeur à reproduire le marquage. Or, pour qu'un marquage soit efficace, il doit être visible. S'il est visible, ce marquage est également visible pour le fraudeur qui peut donc aisément le reproduire. Ainsi, cette solution simple d'application d'un marquage n'est en réalité pas efficace.

Une autre solution pour résoudre ce problème est de ne disposer que de terminaux de paiement filaires, c'est à dire de terminaux de paiement connectés physiquement à une caisse enregistreuse par exemple. Cette solution est certes efficace, mais en réalité peu adaptée à la pratique actuelle qui consiste à offrir une plus grande mobilité aux commerçants et aux clients.

Néanmoins, cette technique est utilisée par exemple dans les grandes surfaces ou dans certains types de magasins.

Les techniques existantes sont donc limitées lorsqu'il s'agit de prévenir ou d'empêcher la réalisation de la fraude dans des commerces de moindre envergure.

On connaît par ailleurs le document « Computing Science - POS Terminal Authentication Protocol to Protect EMV Contactless Payment Card » (NEWCASTLE UNIVERSITY), Technical report CS-TR-1401 of November 2013, le document WO 2014/104436 (SHINHANCARD CO LTD), le document « Product Spec Sheet - Bluetooth Monitoring - Introducing the World's First Multi-RF Monitoring Solution » (ZEBRA) qui décrit un système de surveillance des appareils Bluetooth® présents dans un secteur déterminé, et le document « Wireless Special Interest Group Pci Security Standards Council : Information Supplément : PCI DSS Wireless Guidelines Standard : PCI Data Secuity Stadards » (PCI DSS) dated august 2011 qui traite des contraintes de certification des terminaux de paiement.

Il existe donc un besoin de fournir une technique qui permette au client de s'assurer rapidement et simplement que le terminal qu'il est sur le point d'utiliser pour effectuer une transaction est bien un terminal authentique. Cette technique, permettant de se prémunir des effets négatifs d'une telle fraude, doit être simple à mettre en oeuvre et peu onéreuse.

### 3. Résumé de l'invention

L'invention propose une solution nouvelle pour la détection d'un terminal frauduleux, sous la forme d'un procédé de détection d'un terminal de paiement électronique frauduleux comprenant une étape, mise en oeuvre par un terminal mobile préalablement à l'utilisation dudit terminal de paiement électronique frauduleux pour une transaction de génération d'une alarme indiquant que le terminal de paiement électronique est frauduleux, l'étape de génération d'une alarme étant déclenchée :
- lorsqu'aucun message, en provenance du terminal de paiement électronique, n'est reçu par le terminal mobile, avant l'expiration d'un délai prédéterminé ; ou
- lorsqu'une phase de vérification d'une réponse, reçue en provenance dudit terminal de paiement électronique, à un challenge émis par ledit terminal mobile, délivre un résultat de vérification négatif, ladite étape de vérification étant mise en oeuvre par ledit terminal mobile.

Ainsi, l'invention repose sur une approche nouvelle et inventive de la détection de la substitution et/ou l'introduction de terminaux frauduleux dans un commerce, qui utilise un terminal mobile, par exemple un smartphone, porté par les clients eux-mêmes, pour détecter l'éventuelle présence d'un terminal frauduleux avant d'effectuer une transaction avec ce dernier. En cas de détection d'un terminal frauduleux, le procédé selon l'invention prévoit la génération d'une alarme, permettant de mettre en oeuvre les actions adéquates, par exemple une vérification (par des moyens de contrôle humains ou par un système de vidéo surveillance ...) de la présence d'un terminal frauduleux, sur le lieu d'utilisation du parc de terminaux, ou un appel
direct à une personne chargée de la sécurité du parc de terminaux. La génération de cette alarme permet également d'informer l'utilisateur qu'un terminal de paiement proche/voisin est frauduleux, de manière à prévenir la fraude avant qu'elle n'ait lieue.

Ainsi, dans un commerce, le client/utilisateur est capable, à l'aide de son smartphone de déterminer si le terminal de paiement qu'il est sur le point d'utiliser pour effectuer une transaction est bien un terminal de paiement authentique.

Cette technique, lorsqu'elle est mise en oeuvre par le commerçant lui-même, permet à ce dernier de s'assurer qu'aucun des terminaux présents dans son commerce n'est un terminal frauduleux, évitant ainsi à ces clients d'en être victime.

Cette technique est notamment basée sur des échanges de messages entre le terminal mobile d'un utilisateur (par exemple le porteur de la carte à puce servant pour une transaction bancaire via un terminal de paiement électronique) et le terminal de paiement électronique que cet utilisateur s'apprête à utiliser pour une transaction. En particulier, ces échangent utilisent la technologie BLE, actuellement implantée dans tous les terminaux mobiles de type smartphones, et en cours d'implantation dans les terminaux de paiement électronique.

Selon l'invention, la phase de vérification d'une réponse comprend les étapes suivantes :
- une étape de réception, par le terminal mobile, d'un premier message émis par le terminal de paiement électronique ;
- une étape d'envoi, par ledit terminal mobile audit terminal de paiement électronique, d'un message comprenant au moins un challenge ;
- une étape de réception, par ledit terminal mobile, d'un deuxième message émis par ledit terminal de paiement électronique, ledit deuxième message comprenant une réponse au challenge ;
- une étape de vérification de la réponse par comparaison de ladite réponse avec une réponse de référence, délivrant un résultat de vérification négatif lorsque ladite comparaison est négative, ladite sous-étape de vérification étant mise en oeuvre par ledit terminal mobile.

Ainsi, le procédé de l'invention prévoit une série d'étapes relatives à la communication, c'est-à-dire l'échange de messages, entre le terminal mobile et le terminal de paiement. Plus précisément, un message reçu par le terminal mobile, émis par le terminal de paiement électronique, comprend une réponse à un challenge. Le procédé prévoit ainsi une étape de vérification de cette réponse par comparaison avec une donnée de référence (ou réponse de référence). De telles étapes, constituant la phase de vérification de la réponse, sont essentielles à la mise en oeuvre du procédé de détection d'un terminal de paiement électronique frauduleux puisqu'elles permettent ensuite l'étape de génération d'une alarme correspondant à la détection d'un terminal de paiement électronique frauduleux.

Selon l'invention, le procédé comprend en outre une étape de localisation du terminal de paiement électronique frauduleux, et l'étape de génération d'une alarme tient compte de la localisation du terminal de paiement électronique frauduleux.

Ainsi, le procédé de l'invention prévoit une étape de localisation du terminal frauduleux préalablement détecté, de façon à faciliter l'identification du terminal par le client et ainsi éviter son utilisation.

La localisation est obtenue grâce au niveau de signal bluetooth reçu par le smartphone. Plus le terminal frauduleux est proche, plus le signal bluetooth sera fort. Au contraire, plus le terminal est éloigné, plus le signal bluetooth sera faible. Ce niveau de signal bluetooth reçu, fonction de la distance séparant les terminaux, permet alors une détermination relativement précise de la localisation du terminal frauduleux. En effet, la mise en oeuvre de la technologie BLE permet une précision de localisation de l'ordre de la dizaine de centimètre, ce qui est donc suffisant pour identifier un terminal frauduleux parmi les terminaux authentiques du commerce.

Selon l'invention, l'étape de génération d'une alarme déclenche une étape d'émission d'un message d'avertissement vers au moins un dispositif de communication prédéterminé.

Ainsi, le procédé de détection de l'invention prévoit, lorsqu'un terminal frauduleux a été détecté, l'émission d'un message d'avertissement vers un dispositif prédéterminé. Ce dispositif peut être la centrale de gestion du fournisseur des terminaux ou encore les services de police. Plus généralement, le dispositif vers lequel est envoyé ce message d'avertissement permet la mise en oeuvre d'actions adéquates et rapides de manière à mettre le terminal de paiement frauduleux hors d'usage.

Selon l'invention, le procédé comprend également une étape d'ouverture, par le terminal mobile, d'une application sécurisée/certifiée de détection d'un terminal de paiement électronique frauduleux, visant à simplifier et automatiser la mise en oeuvre du procédé de l'invention.

Selon l'invention, le procédé de détection d'un terminal de paiement électronique frauduleux comprend les étapes suivantes, mises en oeuvre dans un terminal de paiement électronique authentique :
- une étape d'émission d'un premier message ;
- une étape de réception d'un message comprenant au moins un challenge, ledit message étant émis par ledit terminal mobile ;
- une étape d'obtention d'une réponse audit challenge et de cryptage de ladite réponse obtenue, délivrant un cryptogramme ;
- une étape d'envoi d'un deuxième message comprenant au moins ledit cryptogramme, vers ledit terminal mobile.

Ainsi, le procédé de l'invention comprend des étapes mises en oeuvre par le terminal de paiement électronique visant à communiquer avec le terminal mobile de manière à démontrer que le terminal de paiement est bien un terminal authentique. Pour ce faire, ce dernier prépare une réponse au challenge émis par le terminal mobile. Avant d'être envoyée, la réponse au challenge est cryptée par le terminal de paiement. Ces étapes, nécessaires à l'authentification d'un terminal de paiement électronique, permettent ainsi la mise en oeuvre du procédé par tout client équipé d'un smartphone apte à recevoir et lire ces messages.

Selon une caractéristique particulière, chacun des premiers messages émis par le terminal de paiement électronique, comprend des données associées au terminal de paiement électronique correspondant, et ces données comprennent au moins :
- l'identifiant universel unique du terminal de paiement électronique ;
- le numéro de série du terminal de paiement électronique ;
- le niveau de signal bluetooth reçu par le terminal mobile ;
- une information indiquant la capacité du terminal de paiement électronique à être mis au défi.

Ainsi, les premiers messages émis par le terminal de paiement comprennent les informations essentielles permettant d'identifier le terminal de paiement et indiquant également que le terminal correspondant est apte à être mis au défi dans le but de déterminer si ce dernier est un terminal authentique ou bien un terminal frauduleux. Par exemple, un terminal d'ancienne génération peut ne pas être apte à recevoir un défi et y répondre, dans ce cas, cela ne veut pas forcément dire qu'il est frauduleux, c'est pourquoi cette information indiquant la capacité du terminal de paiement électronique à être mis au défi est utile.

Selon l'invention, chacun des deuxièmes messages, émis par un terminal de paiement électronique, comprend des données associées au terminal de paiement électronique et au challenge correspondant. Ainsi, ces données comprennent au moins :
- une réponse cryptée au challenge correspondant ;
- le numéro de série authentique du terminal de paiement électronique ;
- le niveau de signal bluetooth reçu par ledit terminal mobile ;
- au moins une information de contexte du message.

Ainsi, les deuxièmes messages émis par le terminal de paiement comprennent les données essentielles à la détection d'un terminal frauduleux. En effet, le procédé de détection prévoit une étape de décryptage (à l'aide de la clé de déchiffrement) de la réponse émise par le terminal et une comparaison de cette réponse avec une réponse de référence.

Un terminal est donc détecté comme frauduleux lorsque la réponse qu'il fournit est erronée, c'est à dire différente de la réponse de référence attendue par le smartphone. Cette réponse erronée, caractéristique de cette fraude par substitution/introduction d'un terminal frauduleux, déclenche alors la génération de l'alarme destinée à prévenir le client que le terminal qu'il est sur le point d'utiliser pour effectuer une transaction est un terminal de paiement frauduleux.

Les informations de contexte du message ainsi que le numéro de série du terminal sont, par exemple, utilisés par l'application sécurisée afin de mémoriser et répertorier les terminaux de paiement électronique testés par le client à l'aide de son terminal mobile.

L'invention concerne également un terminal mobile pour la détection d'un terminal de paiement électronique frauduleux comprenant au moins :
- des moyens de communication aptes à émettre et/ou recevoir des messages ;
- des moyens de traitement des données contenues dans les messages ;
- des moyens de génération d'une alarme, indiquant qu'un terminal de paiement donné est frauduleux, lorsqu'au moins une donnée contenue dans ledit message reçu dudit terminal donné, diffère de la donnée de référence correspondante.

Un tel dispositif est notamment adapté à mettre en oeuvre le procédé de détection d'un terminal de paiement électronique frauduleux. Il peut s'agir d'un smartphone, notamment celui d'un client ou bien du commerçant lui-même, équipé de la technologie BLE.

L'invention concerne également un terminal de paiement électronique comprenant :
- des moyens de communication aptes à émettre et/ou recevoir des messages ;
- des moyens de traitement des données contenues dans les messages.

Un tel dispositif est notamment adapté à mettre en oeuvre le procédé de détection d'un terminal de paiement électronique frauduleux. Il s'agit ici d'un terminal de paiement électronique mis en oeuvre, par exemple, dans un commerce.

L'invention concerne encore un programme d'ordinateur téléchargeable depuis un réseau de communication et/ou stocké sur un support lisible par un ordinateur et/ou exécutable par un microprocesseur, comprenant des instructions de code de programme pour l'exécution des étapes du procédé de détection d'un terminal de paiement électronique frauduleux tel que décrit précédemment, lorsque ledit programme est exécuté sur un ordinateur.

L'invention concerne également un support d'enregistrement lisible par un ordinateur sur lequel est enregistré un programme d'ordinateur comprenant un jeu d'instructions exécutables par un ordinateur ou un processeur pour mettre en oeuvre le procédé de détection d'un terminal de paiement électronique frauduleux tel que décrit précédemment, lorsque le programme est exécuté sur un ordinateur.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un exemple d'un réseau d'appareils communiquant entre eux selon un mode de réalisation de l'invention ;
- les figures 2A à 2C illustrent des exemples de messages échangés entre les appareils du réseau de la figure 1 ;
- les figures 3A et 3B illustrent respectivement les principales étapes du procédé selon l'invention, mis en oeuvre pour un smartphone et un terminal de paiement électronique du réseau illustré en figure 1 ;
- les figures 4A à 4D illustrent le détail de certaines étapes ou sous-étapes du procédé de la figure 3 ; et
- les figures 5A et 5B illustrent, respectivement, un exemple de smartphone et de terminal de paiement mettant en oeuvre le procédé de la figure 3.

### 5. Description

### 5.1. Principe général de l'invention

Le principe général de l'invention repose sur l'utilisation d'un terminal mobile, porté par l'utilisateur, pour vérifier que le terminal de paiement électronique (TPE) destiné à être utilisé pour effectuer une transaction est un terminal de paiement valide, c'est-à-dire un terminal de paiement authentique du fournisseur de terminaux. En d'autres termes, cette technique est destinée à détecter la substitution d'un terminal de paiement par un terminal frauduleux ou l'introduction d'un terminal frauduleux dans un commerce.

Cette détection est notamment rendue possible par un dialogue entre les terminaux de paiement du parc du commerçant et des terminaux mobiles portés par les clients de ce dernier. Chacun des appareils utilise la technologie Bluetooth Smart (marque déposée), également appelée BLE (pour «Bluetooth Low Energy» en anglais) qui permet un dialogue et une géolocalisation très précise entre les appareils situés dans un rayon prédéterminé.

Un terminal de paiement électronique équipé de la technologie BLE est ainsi apte à émettre, à intervalle régulier ou non, un message contenant des informations caractéristiques de ce dernier, destiné à être reçu par le terminal mobile du client, un smartphone par exemple. Ainsi, dès lors que le client s'approche du terminal de paiement électronique, le processus d'authentification peut commencer.

La réception du message par le smartphone du client déclenche le lancement d'une application sécurisée (à condition que l'application ait été préalablement installée sur le smartphone) destinée à mettre en oeuvre le procédé de détection selon les différents modes de réalisation de l'invention, en « mettant » au défi le terminal de paiement. Pour ce faire, le smartphone envoi un challenge au terminal de paiement qui doit alors crypter une réponse au challenge reçu et la lui renvoyer.

Le smartphone, lorsqu'il reçoit la réponse cryptée sous la forme d'un cryptogramme, est ensuite capable de décrypter et contrôler cette réponse. Si la réponse est erronée, le terminal est identifié comme étant frauduleux, c'est-à-dire comme n'étant pas un terminal authentique du fournisseur.

Par conséquent, si un terminal authentique est substitué/échangé avec un terminal frauduleux ou qu'un terminal frauduleux est introduit, le client est apte à détecter sa présence, via son smartphone, et éviter son utilisation afin de ne pas en subir la fraude.

Par ailleurs, l'application sécurisée exécutée sur le smartphone est apte à transmettre une alerte au fournisseur du terminal afin de le prévenir qu'un terminal frauduleux est utilisé, permettant ainsi la mise en oeuvre d'actions appropriées (désactivation/retrait du terminal frauduleux par exemple).

### 5.2. Description d'un réseau d'appareils pour la mise en oeuvre du procédé selon l'invention

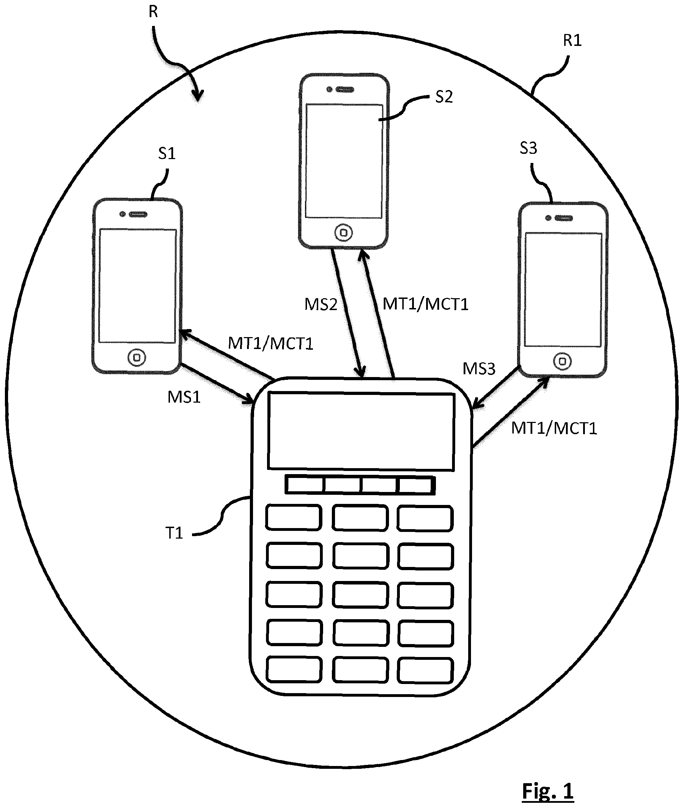

On considère par la suite un exemple d'un réseau d'appareils, présenté en figure 1, pour la mise en oeuvre du procédé selon un mode de réalisation particulier de l'invention.

Dans cet exemple, on considère un réseau R comprenant un terminal T1 de paiement électronique et trois terminaux mobiles S1, S2 et S3 (ici des smartphones) déployés au sein d'un commerce, un restaurant par exemple.

Dans cet exemple, chacun des smartphones du réseau R est potentiellement à l'écoute du terminal de paiement électronique T1 et est apte à détecter sa présence dans un rayon R1 délimitant la portée maximale d'émission/réception des appareils. Les quatre appareils mettent en oeuvre la technologie BLE et sont donc aptes à envoyer et recevoir des messages, selon les normes relatives à cette technologie.

Lorsqu'il est muni de cette technologie BLE, le terminal T1 de paiement électronique est potentiellement capable d'émettre deux types de messages.

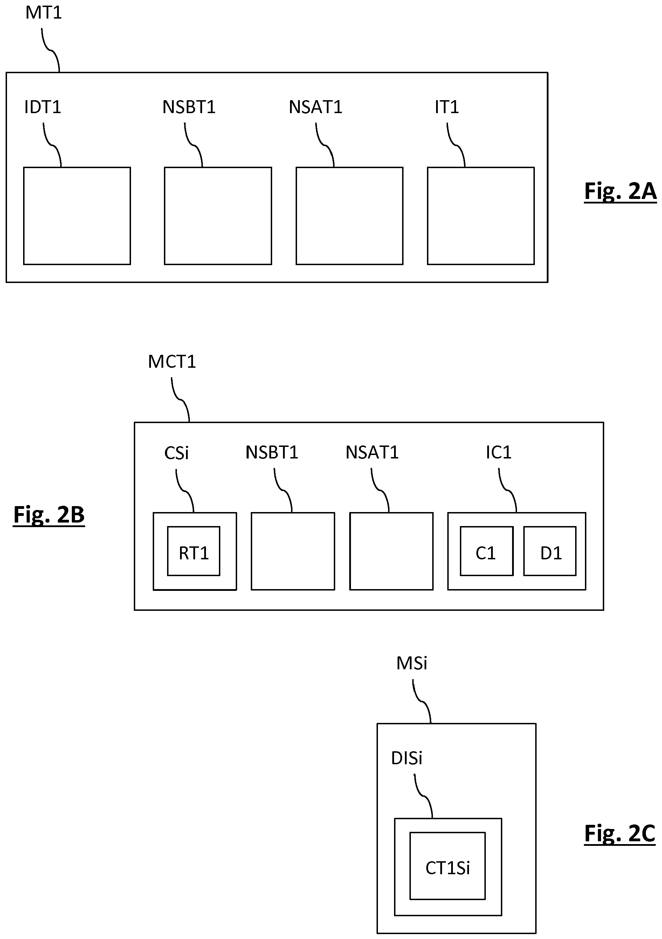

Le premier type de message est un message (MT1) non codé accessible par l'ensemble des appareils situés dans le rayon R1, c'est un message dit de « broadcast », encore appelé « beacon ». Ce type de message n'a donc pas de destinataire particulier et peut être reçu par tout appareil également muni de cette technologie BLE. Comme illustré à la figure 2A, le message (MT1) comprend des informations, telles que l'identifiant du terminal (IDT1), le niveau de signal Bluetooth reçu (NSBT1), le numéro de série authentique du terminal (NSAT1) et une information (IT1) indiquant sa capacité à être mis au défi.

Le second type de message émis par le terminal T1 est un message codé (MCT1) dont le destinataire est unique et clairement désigné. Comme illustré à la figure 2B, le message (MCT1) comprend un cryptogramme (CSi) contenant la réponse (RT1) au challenge du smartphone (Si), le niveau de signal Bluetooth reçu (NSBT1), le numéro de série du terminal (NSAT1) et des informations de contexte (IC1) telles que la date (D1) et l'heure (H1).

Les smartphones (Si), présents dans le réseau R délimité par le rayon R1, sont capables d'émettre un message (MSi) comprenant une donnée d'interrogation (DISi) comprenant un challenge (CT1Si) à destination du terminal T1 (comme illustré en figure 2C).

Dans cet exemple, chaque smartphone (Si) est capable de détecter la présence du terminal T1 dans le réseau R et de communiquer avec lui, en envoyant et recevant les messages détaillés ci-dessus.

Généralement, la communication entre un terminal et un smartphone n'est effectuée que lors du lancement de la phase de transaction, c'est-à-dire lorsque le terminal doit assurer le traitement d'une transaction.

Toutefois, un client peut démarrer le procédé de détection avant même le début de la phase de transaction. Par exemple, lorsque le client se situe dans la file d'attente d'une caisse, il peut ouvrir l'application sécurisée préalablement installée sur son smartphone et déclencher manuellement le procédé de détection d'un terminal de paiement électronique frauduleux.

### 5.3 Description d'un mode de réalisation de l'invention

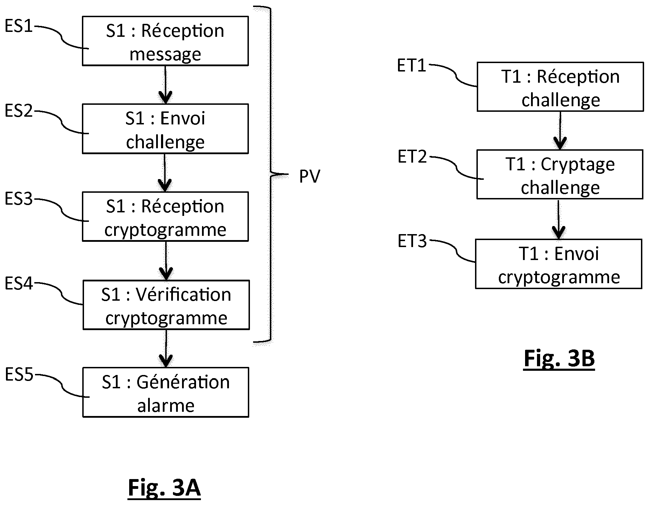

On présente maintenant, en relation avec les figures 3A et 3B, les principales étapes du procédé mises en oeuvre, respectivement, pour le smartphone S1 et le terminal de paiement T1 du réseau R illustré en figure 1.

Le procédé de détection d'un terminal de paiement frauduleux dans un commerce mis en oeuvre par le smartphone S1 comprend principalement une étape (ES5) de génération d'une alarme :
- lorsqu'aucun message, en provenance dudit terminal de paiement électronique (T1), n'est reçu par le terminal mobile (S1), avant l'expiration d'un délai prédéterminé ; ou
- lorsqu'une phase de vérification (PV) d'une réponse, reçue en provenance du terminal de paiement électronique (T1), à un challenge (CT1S1) émis par le terminal mobile (S1), délivre un résultat de vérification négatif.

Plus précisément, la phase de vérification (PV) de la réponse émise par le terminal comprend :
- une étape de ES1 de réception, par le smartphone S1, des messages (MT1) venant du terminal T1 présent dans le rayon R1 d'émission/réception du réseau ;
- une étape ES2 d'envoi d'un challenge par le biais d'un message (MS1) par le smartphone S1 vers le terminal T1;
- une étape ES3 de réception du cryptogramme compris dans le message (MCT1) par le smartphone S1;
- une étape ES4 de vérification de la validité du cryptogramme par le smartphone S1.

Le procédé de détection d'un terminal de paiement frauduleux dans un commerce mis en oeuvre par le terminal T1 comprend:
- une étape ET1 de réception du challenge via le message (MS1) émis par le smartphone S1;
- une étape ET2 de cryptage de la réponse (RT1) au challenge (CT1S1) ;
- une étape ET3 d'envoi du cryptogramme vers le smartphone S1 via un message (MCT1).

Le procédé de détection de l'invention peut également comprendre un certain nombre d'étapes additionnelles ou optionnelles, non illustrées :
- une étape EA1 d'ouverture d'une application sécurisée par le smartphone S1;
- une étape EA2 de confirmation de souhait de paiement par le smartphone S1;
- une étape EA3 d'envoi d'un message d'alarme par le smartphone S1;
- une étape EA4 de localisation du terminal frauduleux ;
- une étape EA5 d'émission d'un message (MT1) par le terminal T1.

Le procédé de détection peut être effectué automatiquement lorsque le terminal T1 entre en phase de transaction ou bien déclenché manuellement par le client par le biais de son application sécurisée.

Un tel procédé est simple à mettre en oeuvre et peu onéreux puisqu'il nécessite uniquement le téléchargement et l'installation d'une application sécurisée par le client sur son smartphone, et une modification du programme des terminaux de paiement électronique. En effet, la technologie BLE, qui équipe déjà la majorité des téléphones mobiles, est en passe d'équiper l'essentiel des terminaux de paiement du marché et la mise en oeuvre du procédé selon les différents modes de réalisation de l'invention ne nécessite aucun composant supplémentaire.

Concernant le terminal de paiement électronique, les étapes d'émission et de réception de messages peuvent être mises en oeuvre simultanément, ou l'une après l'autre, sans ordre prédéterminé. En effet, il importe surtout, pour détecter un terminal fraudeur, que ces étapes soient effectuées fréquemment, de façon à ce que le terminal soit aisément détecté par un smartphone situé à son voisinage et que l'établissement de la communication avec ce dernier soit rapide.

### 5.3.1 La réception des messages issus du terminal de paiement électronique par le smartphone (étape ES1)

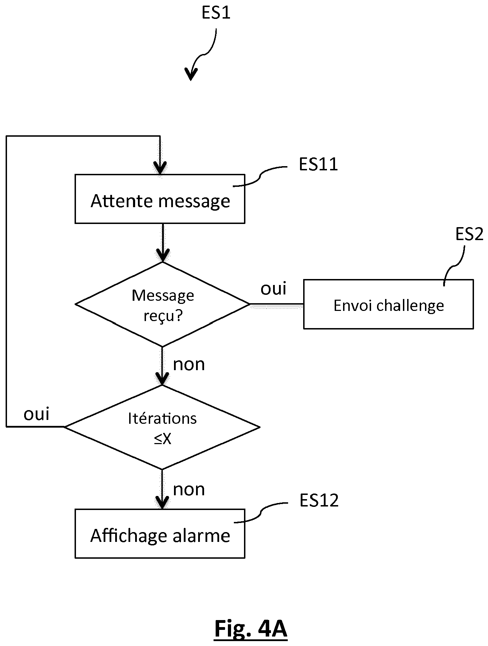

La mise en oeuvre du procédé de détection de l'invention comprend une étape (ES1), dans laquelle le smartphone S1 réceptionne le(s) message(s) (MT1) de broadcast émis par le terminal de paiement électronique voisin, c'est-à-dire le terminal de paiement électronique situé dans le rayon R1 d'émission/réception du smartphone S1. Pour ce faire, le smartphone S1 se met en attente (étape ES11, illustrée à la figure 4a) d'un message en provenance du terminal de paiement électronique T1. Le temps d'attente est prédéterminé et tient compte par exemple de l'utilisation éventuelle du terminal de paiement électronique (en phase de transaction du client précédent, par exemple).

Ce temps d'attente peut également être calculé en fonction du temps de transmission des messages dans le réseau, de la taille des messages émis (c'est-à-dire des informations émises), du nombre de terminaux dans le parc, etc.

Durant ce temps d'attente, si aucun message n'est reçu, l'étape est effectuée de nouveau et répétée jusqu'à réception d'un message ou un nombre d'itérations X prédéterminé, ou encore l'interruption du procédé par le client.

Ainsi, si aucun message n'est reçu après ce nombre prédéterminé d'itérations X de cette étape d'attente (ES11), une alarme est générée.

Par exemple, la génération de cette alarme consiste à afficher un message d'alarme sur l'écran du smartphone S1 (étape ES12) afin de prévenir le client qu'aucune communication n'a pu être effectuée avec le terminal de paiement électronique voisin. Un des raisons pour lesquelles aucun message n'est reçu peut être la désactivation du système Bluetooth sur le terminal T1, notamment, ou encore le fait que le terminal de paiement électronique T1 n'est pas muni de cette technologie, soit parce qu'il s'agit d'un ancien modèle soit parce qu'il s'agit d'un terminal frauduleux ne mettant pas en oeuvre cette technologie.

### 5.3.2 L'envoi d'un challenge au terminal de paiement électronique par le smartphone (étape ES2)

Lorsque le smartphone S1 reçoit un message (MT1) provenant du terminal de paiement électronique T1 destiné à être utilisé pour effectuer une transaction, le smartphone S1 envoie un message (MS1) dont l'unique destinataire est le terminal de paiement électronique T1.

Le message (MS1) est envoyé au moyen du système Bluetooth du smartphone. Le choix du destinataire du message est rendu possible grâce à l'identifiant du terminal (IDT1) compris dans le message (MT1) reçu précédemment par le smartphone S1.

Le message (MS1) envoyé par le smartphone S1 comprend notamment un challenge (CT1S1) destiné à déterminer si le terminal de paiement électronique T1 est un terminal de paiement authentique.

Le challenge (CT1S1) se présente, par exemple, sous la forme d'une chaîne aléatoire ou est de type « token » de taille fixe.

### 5.3.3 Réception du challenge par le terminal de paiement électronique T1 (étape ET1)

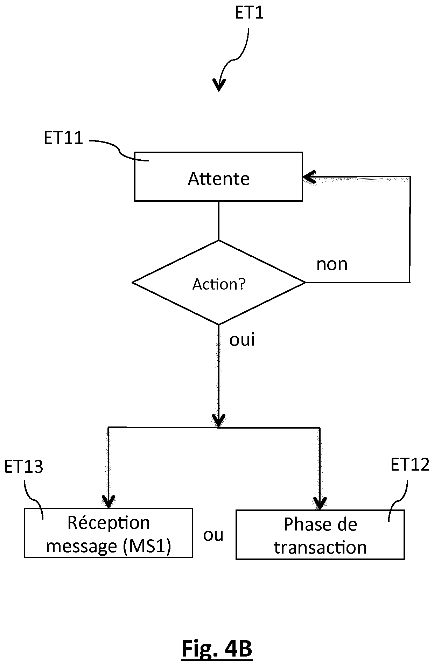

Lorsque le terminal de paiement électronique T1 n'est pas en phase de transaction, ce dernier se met en attente (étape ET11 illustré sur la figure 4B).

Cette étape d'attente (ET11) consiste soit à recevoir un message (MSi) de la part d'un smartphone situé dans le rayon R1 d'émission/réception (ici le message (MS1) du smartphone S1), soit à recevoir une information ou une commande de la part du marchand visant à déclencher la phase de transaction.

Le terminal de paiement électronique T1 maintient cette étape d'attente (ET11) jusqu'à ce qu'une action soit effectuée. Si le terminal de paiement électronique T1 détecte une action, deux cas sont possibles:
- cas n°1: le terminal de paiement reçoit une information ou une commande du marchand indiquant la volonté d'effectuer une transaction. Le terminal déclenche alors directement la phase de transaction (étape ET12), c'est-à-dire sans vérification de l'authenticité du terminal de paiement électronique T1 par le client. Le terminal de paiement électronique T1 est alors apte à recevoir le moyen de paiement du client (par exemple une carte à puce) et à effectuer le processus de transaction classiquement.
- cas n°2: le terminal de paiement électronique T1 reçoit un message (MS1) du smartphone S1 (étape ET13), contenant notamment le challenge (CT1S1).

### 5.3.4 Cryptage de la réponse au challenge par le terminal de paiement électronique T1 (étape ET2)

Dans le cas n°2, c'est-à-dire lorsque le terminal de paiement électronique T1 reçoit un message (MS1) de la part du smartphone S1, le terminal de paiement électronique T1 doit crypter la réponse au challenge (CT1S1) compris dans ce message (MS1), et ce, quelque soit le type de challenge émis par le smartphone S1.

L'étape du cryptage consiste à chiffrer/coder la réponse (RT1) au challenge reçu (CT1S1) avant de la renvoyer au smartphone S1 pour vérification. Ce cryptage consiste, par exemple, à transformer la réponse à ce challenge (CT1S1) en un cryptogramme (CS1).

La réponse (RT1) au challenge (CT1S1) se présente sous la forme d'une chaîne aléatoire cryptée. Bien évidemment, tout type de réponse à un challenge, connu de l'Homme du métier et permettant d'atteindre un objectif similaire peut être mis en oeuvre dans l'invention.

### 5.3.5 Envoi du cryptogramme par le terminal de paiement électronique T1 vers le smartphone S1 (étape ET3)

Après avoir codé la réponse (RT1) au challenge (CT1S1) en un cryptogramme (CS1), le terminal T1 émet un message (MCT1) dont l'unique destinataire est le smartphone S1.

Le message (MCT1) comprend le cryptogramme (CS1), le niveau de signal Bluetooth reçu (NSBT1), le numéro de série du terminal de paiement électronique T1 (NSAT1), utile à l'identification du terminal, et des informations de contexte telles que la date (D1) et l'heure (H1) à laquelle le message (MCT1) est émis.

### 5.3.6 Réception du cryptogramme par le smartphone S1 (étape ES3)

La mise en oeuvre du procédé de détection de l'invention comprend une étape (ES3), dans laquelle le smartphone S1 réceptionne le message (MCT1) émis par le terminal de paiement électronique et comprenant notamment le cryptogramme (CS1).

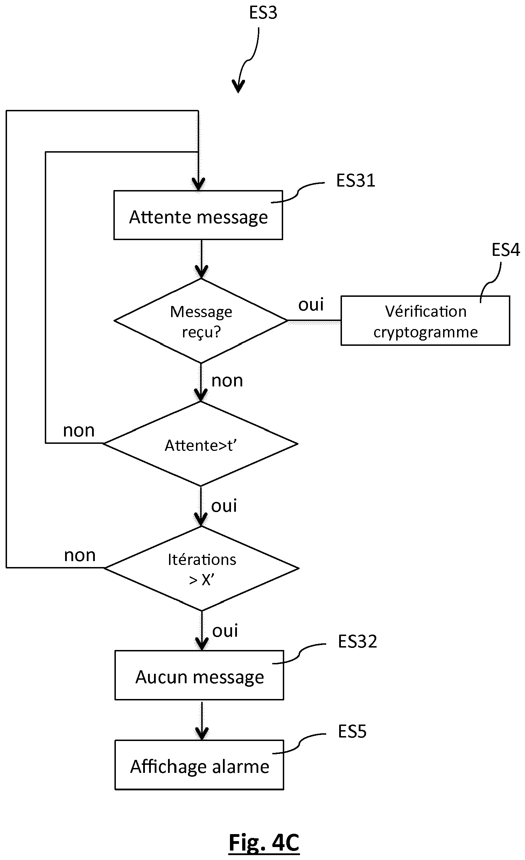

Ainsi, suite à l'envoi du message (MS1) comprenant le challenge (CS1) par le smartphone S1, ce dernier se met en attente (étape ES31, illustrée à la figure 4C) du message (MCT1) en provenance du terminal de paiement électronique T1.

Le temps d'attente (t') est prédéterminé et tient compte par exemple du temps de transmission des messages dans le réseau, de la taille des messages émis (c'est-à-dire des informations émises), du nombre d'appareils dans le parc, etc.

Durant ce temps d'attente, si le message (MCT1) comprenant le cryptogramme (CS1) est reçu, l'étape (ES4) de vérification du cryptogramme, détaillée par la suite, est effectuée.

Si, à l'issue de ce temps d'attente (t'), aucun message n'est reçu, l'étape d'attente (ES31) est effectuée de nouveau et répétée jusqu'à réception d'un message (MCT1) ou un nombre d'itérations X' prédéterminé, ou encore l'interruption du procédé par le client.

Ainsi, si aucun message n'est reçu après ce nombre prédéterminé d'itérations X', une alarme est générée (étape ES5).

L'étape de génération d'une alarme (ES5) est détaillée ci-après.

### 5.3.7 Vérification de la validité du cryptogramme par le smartphone S1 (étape ES4)

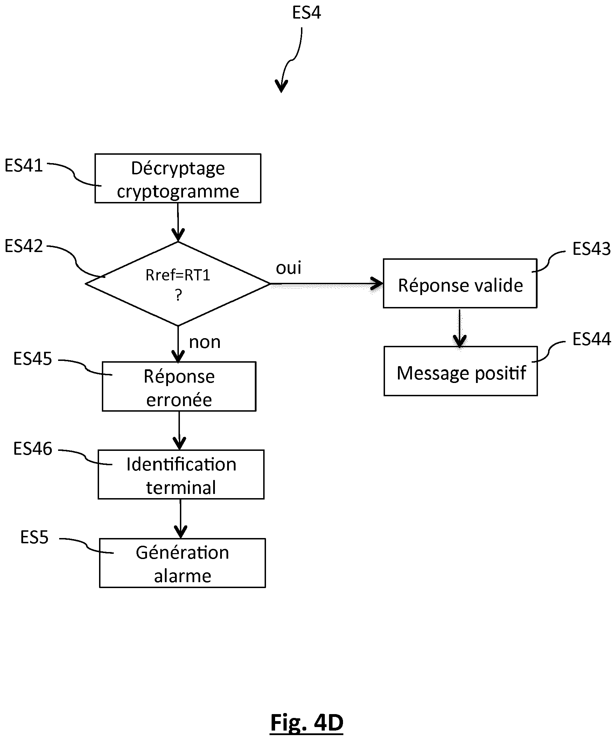

Le message (MCT1) reçu lors de l'étape (ES3) de réception précédente est ensuite traité par le smartphone S1. Pour ce faire, ce dernier effectue une vérification de la validité du cryptogramme (CS1) contenue dans le message (MCT1) reçu afin de détecter si le terminal de paiement électronique T1 est authentique, ou bien frauduleux, en relation avec les étapes illustrées en figure 4D.

Tout d'abord, le cryptogramme (CS1) est déchiffré/décrypté par le smartphone à l'aide d'une clé de déchiffrement (étape ES41). Cette clé de déchiffrement, spécifique à chacun des terminaux authentiques, est par exemple récupérée par l'application sécurisée du smartphone sur un serveur dédié ou bien sur un élément sécurisé contenu dans le smartphone (une bibliothèque sécurisée contenant au moins une clé de déchiffrement adaptée).

La clé de déchiffrement du cryptogramme ne peut pas être transmise dans le message (MCT1) car si le message était intercepté, par le fraudeur par exemple, il pourrait alors déchiffrer l'information comprise dans le cryptogramme (CS1).

Après décryptage du cryptogramme (CS1), le smartphone S1 compare la réponse (RT1) envoyée par le terminal de paiement électronique T1 au challenge (CT1S1) du smartphone S1 avec une réponse attendue, dite réponse de référence (Rref). Cette réponse de référence est caractéristique des terminaux authentiques et peut être vérifiée via une application distincte de contrôle apte à vérifier la validité d'un cryptogramme, cette application de contrôle pouvant être accédée « en ligne » ou être installée dans le smartphone.

La vérification de la réponse (RT1) comprend une étape de comparaison (étape ES42) avec une réponse de référence (Rref). Lors de cette étape (ES42) de comparaison, deux cas sont possibles :
- cas 1 (étape ES43) : la réponse (RT1) du terminal de paiement électronique T1 correspond à la réponse (Rref) attendue par le smartphone S1. Ce résultat indique que le terminal de paiement électronique T1 est authentique, c'est-à-dire que ce n'est pas un terminal frauduleux (selon les critères pris en compte dans la présente invention) et que le client peut effectuer la transaction sans risque que ses données de paiement soient captées.
- cas 2 : la réponse (RT1) du terminal de paiement électronique T1 diffère de la réponse (Rref) attendue par le smartphone S1. Le terminal de paiement électronique T1 est alors considéré comme potentiellement frauduleux, c'est-à-dire qui a été introduit ou échangé avec un des terminaux authentiques du parc.

Dans le cas 1, c'est-à-dire lorsque le terminal de paiement électronique T1 est un terminal authentique (IRT1= Rref), le smartphone S1 affiche (étape ES44) un message positif sur l'écran du smartphone S1 indiquant que le terminal de paiement électronique T1, correspondant au terminal sur lequel la transaction va être effectuée, est un terminal authentique du fournisseur de terminaux.

Dans le cas 2, c'est-à-dire lorsque le terminal de paiement électronique T1 est supposé être un terminal frauduleux, ce dernier est identifié (étape ES46) par le smartphone S1 mettant en oeuvre le procédé de détection.

Pour ce faire, le smartphone S1 utilise les informations concernant l'identifiant (IDT1) et le numéro de série (NSAT1) du terminal de paiement électronique T1 compris dans les messages (MT1 et MCT1) envoyés par ce dernier. Lorsque le terminal frauduleux est identifié, le smartphone S1 génère alors une alarme selon l'étape (ES5) décrite en détails ci-après.

### 5.3.8 La génération d'une alarme (étape ES5)

Dans le cas où le terminal de paiement électronique T1 est identifié comme étant potentiellement frauduleux (parce que la réponse au challenge reçue par le smartphone S1 en provenance du terminal de paiement électronique T1 n'est pas valide), l'étape (ES45) délivre une information de fraude relative au terminal de paiement électronique T1 et les informations concernant son identité sont fournies lors de l'étape d'identification (ES46), lorsqu'elles sont disponibles. Ces informations déclenchent la génération (étape ES5) d'une alarme, indiquant que le terminal donné (ici le terminal de paiement électronique T1) est frauduleux et vise à informer le client que le terminal de paiement électronique qu'il est sur le point d'utiliser pour effectuer une transaction est potentiellement frauduleux.

En outre, une telle alarme peut également être générée dans le cas où le smartphone S1 n'a pas reçu de réponse (étape ES32) au challenge qu'il a envoyé au terminal de paiement électronique T1. Dans ce cas, il est possible que le terminal ait été dans une situation d'incapacité à lire et/ou crypter le challenge envoyé par le smartphone, par exemple. Un tel terminal est par conséquent considéré comme potentiellement frauduleux.

L'alarme peut consister en l'affichage d'un message d'alarme sur l'écran de communication du smartphone S1, l'émission d'une alarme sonore et/ou lumineuse par le smartphone, notamment. On comprend ici que d'autres solutions équivalentes peuvent également être mises en oeuvre.

### 5.3.9 L'ouverture d'une application sécurisée par le smartphone (étape EA1)

Une étape optionnelle (EA1) du procédé consiste à ouvrir automatiquement une application sécurisée lorsque le smartphone reçoit un message MT1 de la part du terminal de paiement électronique T1. Cette application sécurisée, nécessaire à la mise en oeuvre du procédé de détection d'un terminal frauduleux, selon les différents modes de réalisation de l'invention, peut également être ouverte manuellement par le client/l'utilisateur lorsqu'il souhaite effectuer une transaction.

Cette application sécurisée, mise à disposition au téléchargement par le fournisseur des terminaux de paiement, peut aisément être installée sur un smartphone et est simple d'utilisation.

### 5.3.10 Confirmation de souhait de paiement par le smartphone (étape EA2)

Une autre étape optionnelle (EA2) du procédé consiste à afficher automatiquement, par l'intermédiaire de l'application sécurisée, un message requérant la confirmation, par l'utilisateur, du souhait d'effectuer une transaction et donc de mette en oeuvre le procédé de l'invention. Ce message peut, par exemple, se présenter sous la forme d'une fenêtre dite « Pop-Up » bien connue de l'art antérieur.

Une réponse positive de la part de l'utilisateur déclenche la mise en oeuvre du procédé de détection tandis qu'une réponse négative annule la mise en oeuvre du procédé de l'invention. Une telle réponse négative peut, optionnellement, fermer l'application sécurisée.

### 5.3.11 L'envoi d'un message d'avertissement par le smartphone S1 (étape EA3)

Le procédé de l'invention, selon ses différents modes de réalisation, comprend optionnellement, suite à l'étape (ES5) de génération d'une alarme lorsque le terminal de paiement électronique T1 est considéré comme potentiellement frauduleux, une étape (EA3) d'envoi d'un message, par le biais du système BLE, sur l'ensemble de la bande de diffusion R1. Ce message, dit de « broadcast », comprend une information visant à indiquer aux éventuels autres smartphones présents dans le rayon de diffusion R1 qu'un terminal frauduleux est présent. L'identifiant et/ou le numéro de série de ce terminal, lorsqu'ils sont connus, peuvent être transmis dans ce message, permettant ainsi aux autres smartphones d'effectuer tout ou partie du procédé de détection.

Le message d'avertissement peut également consister en un message envoyé directement au(x) fournisseur(s) des terminaux, permettant ainsi à ce(s) dernier(s) de mettre en oeuvre les actions adéquates afin de retirer le terminal en cause du commerce, dans les délais les plus brefs.

Le(s) fournisseur(s) des terminaux peuvent ensuite, dès réception du message d'avertissement, vérifier les éventuels autres terminaux de paiement du commerce (ou uniquement le terminal frauduleux lorsque ce dernier à été localisé), par exemple en vérifiant les numéros de série de chaque terminal de paiement électronique en cours d'utilisation.

### 5.3.12 La localisation du terminal frauduleux (étape EA4)

Une étape optionnelle (EA4) du procédé de détection selon les différents modes de réalisation de l'invention, consiste à déterminer la distance séparant le smartphone S1 du terminal de paiement électronique T1 lorsque celui-ci est frauduleux. Ainsi, si le terminal de paiement électronique T1 est confirmé comme étant un terminal frauduleux (étape ES45), le smartphone S1 peut calculer la distance (D) à laquelle se situe le terminal de paiement électronique T1.

Pour ce faire, le smartphone S1 utilise le niveau du signal Bluetooth reçu (NSBT1) du terminal de paiement électronique T1. Cette information est notamment comprise dans les messages (MT1 et MCT1) transmis par le terminal de paiement électronique T1.

Selon le niveau de signal Bluetooth reçu (NSBT1), le smartphone S1 est capable d'estimer, de manière relativement précise (de l'ordre de la dizaine de centimètres), la distance (D) le séparant du terminal de paiement électronique T1.

Par l'intermédiaire de cette estimation, l'utilisateur peut aisément identifier le terminal frauduleux au sein du commerce afin de ne pas l'utiliser pour effectuer sa transaction et ainsi éviter la fraude.

### 5.3.13 L'émission d'un message par le terminal T1 (étape EA5)

Que le terminal de paiement électronique T1 soit un terminal authentique ou bien un terminal frauduleux, il peut être apte à émettre, par le biais de la technologie BLE, un message (MT1) sur la bande de diffusion. En effet, dès lors qu'un terminal de paiement électronique authentique est muni de la technologie BLE, il est apte à émettre un message de « broadcast » de type « beacon ». Il est donc probable que les fraudeurs munissent également des terminaux de paiement électroniques frauduleux de cette technologie, de façon à limiter la détection de tels terminaux frauduleux en leur prêtant un comportement le plus proche possible d'un terminal authentique.

Ce message (MT1) est accessible par l'ensemble des appareils voisins situés dans le rayon d'émission R1 et capables d'écouter/réceptionner ce message (les smartphones S1, S2 et S3 dans notre exemple).

Comme détaillé précédemment et illustré à la figure 2A, le terminal de paiement électronique T1 émet un message (MT1) contenant son identifiant (IDT1), le niveau du signal Bluetooth (NSBT1), son numéro de série (NSAT1) et une information (IT1) indiquant sa capacité à être mis au défi.

L'étape d'émission de ces messages est indépendante des autres étapes du procédé de l'invention et peut être effectuée de manière aléatoire, ou non, et à intervalles réguliers ou non. De préférence, l'émission de ces messages s'effectue fréquemment afin qu'un smartphone reçoive relativement rapidement un de ces messages permettant ainsi, quasi instantanément, la mise en oeuvre du procédé, selon les différents modes de réalisation de l'invention. En d'autres termes, plus la fréquence d'envoi de ces messages est élevée, plus il est rapide pour un utilisateur de déterminer si le terminal qu'il est sur le point d'utiliser pour effectuer une transaction est un terminal frauduleux ou non.

### 5.4 Description des appareils du réseau selon un mode de réalisation de l'invention

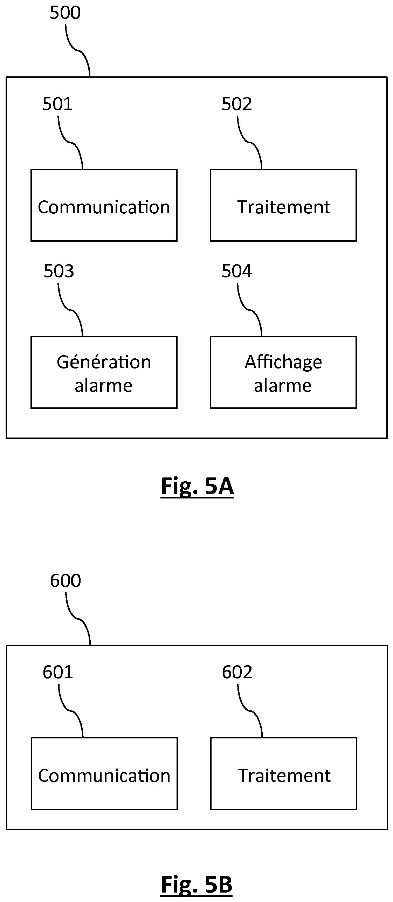

On décrit, en relation avec les figures 5A et 5B, un smartphone ainsi qu'un terminal de paiement, comprenant chacun des moyens d'exécution du procédé de détection d'un terminal frauduleux dans un réseau, selon les différents modes de réalisation de l'invention décrits précédemment.

### 5.4.1 Description d'un smartphone de l'invention

Ainsi, un smartphone 500 (illustré à la figure 5A) selon les différents modes de réalisation de l'invention comprend :
- des moyens de communications 501, par exemple sous la forme d'un ou plusieurs modules, mettant en oeuvre la technologie BLE, aptes à émettre et recevoir des messages avec un ou plusieurs terminaux compatibles, y compris des terminaux de paiement électronique ;
- des moyens de traitement 502, par exemple un microprocesseur, par exemple sous la forme d'un ou plusieurs modules, aptes à traiter les informations comprises dans les messages (ici, MCT1 et MT1) reçues par le smartphone de manière à détecter si un terminal de paiement électronique (ici, le terminal T1) est frauduleux en comparant une donnée (ici RT1) du message (MCT1) reçue avec une données de référence (ici Rref) des terminaux authentiques ;
- des moyens de génération 503 d'une alerte, par exemple sous la forme d'un ou plusieurs modules, lorsque les moyens de traitement 502 détecte un terminal de paiement électronique comme potentiellement frauduleux ; et
- des moyens d'affichage 504 d'une alarme par exemple sous la forme d'un ou plusieurs modules, visant à informer le client que le terminal de paiement électronique ayant envoyé les messages est potentiellement frauduleux.

### 5.4.2 Description d'un terminal de paiement électronique de l'invention

Ainsi, un terminal 600 (illustré à la figure 5B) selon les différents modes de réalisation de l'invention peut comprendre :
- des moyens de communications 601, par exemple sous la forme d'un ou plusieurs modules, mettant en oeuvre la technologie BLE, aptes à émettre et recevoir des messages avec un ou plusieurs smartphones compatibles ;
- des moyens de traitement 602, par exemple un microprocesseur, par exemple sous la forme d'un ou plusieurs modules, aptes à traiter les informations comprises dans les messages (ici, MS1) reçues par le terminal de manière à préparer et crypter une réponse en fonction d'un challenge (CTiSi) reçu.

### 5.5 Autres aspects et variantes

Dans une variante, un commerçant étant en possession d'un Smartphone équipé de la technologie BLE peut, par le biais de l'application certifiée/sécurisée, mettre en oeuvre directement le procédé de détection de l'invention de manière à scanner, par exemple périodiquement, les appareils présents dans son parc et ainsi identifier la présence d'un éventuel terminal de paiement frauduleux. L'invention permet donc également au commerçant de s'assurer que :
- les terminaux utilisés dans son commerce sont bien des terminaux authentiques ; et
- ses clients ne seront pas victime d'une fraude en utilisant ses terminaux.

En outre, si une alerte est générée, elle peut être exploitée de différentes façons. En effet, le mode d'émission de l'alerte est configurable, de manière à s'adapter au mieux aux besoins des utilisateurs des terminaux de paiement électronique ou aux commerçants.

Par ailleurs, des moyens autres que la vérification de la réponse du terminal à un challenge peuvent être utilisées, dans la mesure où ils permettent de répondre à la même problématique consistant à détecter l'introduction d'un terminal frauduleux ou la substitution d'un terminal authentique par un terminal frauduleux dans un commerce.

De même, une combinaison de plusieurs moyens, dont la vérification de la réponse du terminal à un challenge, peut être mise en oeuvre, de façon à optimiser les performances du procédé de détection conforme à l'invention, tout en minimisant les fausses alertes.

Le smartphone de l'invention comprend, en outre, des moyens de mémoire dans lesquels il peut enregistrer les identifiants des terminaux pour lesquels le procédé de détection de l'invention a été mis en oeuvre au moins une fois auparavant. À chaque terminal peut être ainsi associée une information de terminal authentique ou terminal frauduleux.

Cet aspect permet d'effectuer, au choix du client, tout ou partie du procédé de l'invention selon la date et/ou l'heure à laquelle le procédé a été mis en oeuvre pour la dernière fois pour un terminal donné connu. La date et l'heure peuvent notamment être enregistrées par le smartphone lorsque ce dernier reçoit le message (MCT1) comprenant notamment ces informations de contexte (IC1).

Le procédé de l'invention offre la possibilité au client de savoir que dans un rayon de quelques mètres, il y a un terminal frauduleux et qu'il faut l'éviter. Cette information lui est fournie de manière quasi instantanée et lui permet ne pas être victime de cette fraude, limitant ainsi les pertes financières associées.

Le procédé de détection est mis en oeuvre par l'ensemble des smartphones et des terminaux présents dans le rayon R1 d'émission/réception. Ainsi, le terminal frauduleux peut être identifié comme tel par plusieurs smartphones. Par conséquent, le message d'avertissement est envoyé par les différents smartphones ayant identifié la fraude. Cet aspect permet notamment de confirmer la fraude et de s'assurer que le fournisseur des terminaux ou les personnes en charge de la sécurité des terminaux sont informés.

Le procédé de l'invention peut également être mis en oeuvre dans tous types d'appareils électroniques mobile ou fournissant des services autres que le paiement.

Un tel procédé de détection d'un terminal frauduleux met en oeuvre la technologie BLE. Toutefois, le procédé de l'invention pourrait être mis en oeuvre avec tout autre type de technologie permettant une communication courte distance/portée. Par exemple, le procédé de détection de l'invention pourrait être mis en oeuvre par le biais de la technologie WIFI (marque déposée).

## Revendications

1. Procédé de détection d'un terminal de paiement électronique frauduleux (T1), **caractérisé en ce qu'**il comprend une étape (ES5), mise en oeuvre par un terminal mobile (S1), préalablement à l'utilisation dudit terminal de paiement électronique frauduleux pour une transaction de paiement, de génération d'une alarme indiquant que ledit terminal de paiement électronique (T1) est frauduleux, ladite étape (ES5) de génération d'une alarme étant déclenchée :
• lorsqu'aucun message, en provenance dudit terminal de paiement électronique (T1), n'est reçu par ledit terminal mobile (S1), avant l'expiration d'un délai prédéterminé ; ou
• lorsqu'une phase de vérification (PV) d'une réponse, reçue en provenance dudit terminal de paiement électronique (T1), à un challenge (CT1S1) émis par ledit terminal mobile (S1), délivre un résultat de vérification négatif, ladite étape de vérification étant mise en oeuvre par ledit terminal mobile (S1).

2. Procédé de détection d'un terminal de paiement électronique frauduleux selon la revendication 1, **caractérisé en ce que** ladite phase de vérification (PV) d'une réponse comprend les étapes suivantes :
• une étape (ES1) de réception, par ledit terminal mobile (S1), d'un premier message (MT1) émis par ledit terminal de paiement électronique (T1) ;
• une étape (ES2) d'envoi, par ledit terminal mobile (S1) audit terminal de paiement électronique (T1), d'un message (MS1) comprenant au moins un challenge (CT1S1) ;
• une étape (ES3) de réception, par ledit terminal mobile (S1), d'un deuxième message (MCT1) émis par ledit terminal de paiement électronique (T1), ledit deuxième message (MCT1) comprenant une réponse (RT1) au challenge (CT1S1) ;
• une étape (ES4) de vérification de la réponse (RT1) par comparaison de ladite réponse (RT1) avec une réponse de référence (Rref), délivrant un résultat de vérification négatif lorsque ladite comparaison est négative, ladite sous-étape de vérification étant mise en oeuvre par ledit terminal mobile (S1).

3. Procédé de détection d'un terminal de paiement électronique frauduleux selon la revendication 1 ou la revendication 2, **caractérisé en ce qu'**il comprend en outre une étape (EA4) de localisation dudit terminal de paiement électronique frauduleux (T1) et **en ce que** ladite étape (ES5) de génération d'une alarme tient compte de ladite localisation.

4. Procédé de détection d'un terminal de paiement électronique frauduleux selon l'une quelconque des revendications 1 à 3, **caractérisé en ce que** ladite étape (ES5) de génération d'une alarme déclenche une étape (EA3) d'émission d'un message d'avertissement vers au moins un dispositif de communication prédéterminé.

5. Procédé de détection d'un terminal de paiement électronique frauduleux selon l'une quelconque des revendications 1 à 4, **caractérisé en ce qu'**il comprend également une étape (EA1) d'ouverture, par le terminal mobile (S1), d'une application sécurisée de détection d'un terminal de paiement électronique frauduleux.

6. Procédé de détection d'un terminal de paiement électronique frauduleux selon la revendication 1, **caractérisé en ce qu'**il comprend les étapes suivantes, mises en oeuvre dans un terminal de paiement électronique authentique (T2) :
• une étape (EA5) d'émission d'un premier message (MT2) ;
• une étape (ET1) de réception d'un message (MS1) comprenant au moins un challenge (CT2S1), ledit message (MS1) étant émis par ledit terminal mobile (S1) ;
• une étape (ET2) d'obtention d'une réponse (RT2) audit challenge (CT2S1) et de cryptage de ladite réponse (RT2) obtenue, délivrant un cryptogramme (CS1) ;
• une étape (ET3) d'envoi d'un deuxième message (MCT2) comprenant au moins ledit cryptogramme (CS1), vers ledit terminal mobile (S1).

7. Procédé de détection d'un terminal de paiement électronique frauduleux selon la revendication 6, **caractérisé en ce que** chacun desdits premiers messages (MTi), émis par un terminal de paiement électronique (Ti), comprend des données associées audit terminal de paiement électronique (Ti) correspondant, et **en ce que** lesdites données comprennent au moins :
• l'identifiant (IDTi) universel unique dudit terminal de paiement électronique (Ti) ;
• le numéro de série dudit terminal de paiement électronique (Ti) ;
• le niveau de signal bluetooth reçu (NSBTi) par ledit terminal mobile (S1) ;
• une information (ITi) indiquant la capacité du terminal de paiement électronique (Ti) à être mis au défi.

8. Procédé de détection d'un terminal de paiement électronique frauduleux selon la revendication 6, **caractérisé en ce que** chacun desdits deuxième messages (MCTi), émis par un terminal de paiement électronique (Ti), comprend des données associées audit terminal de paiement électronique (Ti) et au challenge (CTiSi) correspondant, et **en ce que** lesdites données comprennent au moins :
• une réponse cryptée (CSi) au challenge (CTiSi) correspondant ;
• le numéro de série authentique dudit terminal de paiement électronique (Ti) ;
• le niveau de signal bluetooth reçu (NSBTi) par ledit terminal mobile (S1) ;
• au moins une information de contexte (ICi) dudit message (MCTi).

9. Terminal mobile (Si) mettant en oeuvre les étapes du procédé de détection selon les revendications 1 à 5, **caractérisé en ce qu'**il comprend au moins :
• des moyens de communication (501) aptes à émettre et/ou recevoir des messages (MSi) ;
• des moyens de traitement (502, 602) des données contenues dans les messages (MTi, MCTi) ;
• des moyens de génération d'une alarme (503), indiquant qu'un terminal de paiement donné est frauduleux, lorsqu'au moins une donnée contenue dans ledit message (MCTi) reçu dudit terminal (Ti) donné, diffère de la donnée de référence correspondante.

10. Terminal de paiement électronique (Ti) mettant en oeuvre les étapes du procédé de détection selon les revendications 6 à 8, **caractérisé en ce qu'**il comprend :
• des moyens de communication (601) aptes à émettre et/ou recevoir des messages (MTi, MCTi) ;
• des moyens de traitement (602) des données contenues dans les messages (MSi).

11. Programme d'ordinateur téléchargeable depuis un réseau de communication et/ou stocké sur un support lisible par un ordinateur et/ou exécutable par un microprocesseur, comprenant des instructions de code de programme pour l'exécution des étapes du procédé de détection d'un terminal de paiement électronique frauduleux selon l'une quelconque des revendications 1 à 8 lorsque ledit programme est exécuté sur un ordinateur.

12. Support d'enregistrement lisible par un ordinateur sur lequel est enregistré un programme d'ordinateur comprenant un jeu d'instructions exécutables par un ordinateur ou un processeur pour mettre en oeuvre le procédé de détection d'un terminal de paiement électronique frauduleux selon au moins une des revendications 1 à 8.

## Patentansprüche

1. Verfahren zum Erkennen eines betrügerischen elektronischen Zahlungsterminals (T1), **dadurch gekennzeichnet, dass** es einen Schritt (ES5), der von einem mobilen Endgerät (S1) vor dem Verwenden des betrügerischen elektronischen Zahlungsterminals für eine Zahlungstransaktion durchgeführt wird, des Erzeugens eines Alarms aufweist, der anzeigt, dass das elektronische Zahlungsterminal (T1) betrügerisch ist, wobei der Schritt (ES5) des Erzeugens eines Alarms ausgelöst wird:
• wenn von dem elektronischen Zahlungsterminal (T1) durch das mobile Endgerät (S1) vor dem Ablauf einer vorbestimmten Frist keine Nachricht erhalten wird oder
• wenn eine Phase des Prüfens (PV) einer Antwort, die von dem elektronischen Zahlungsterminal (T1) auf eine Challenge (CT1S1), die von dem mobilen Endgerät (S1) gesendet wird, erhalten wird, ein negatives Ergebnis liefert, wobei der Schritt des Prüfens von dem mobilen Endgerät (S1) durchgeführt wird.

2. Verfahren zum Erkennen eines betrügerischen elektronischen Zahlungsterminals nach Anspruch 1, **dadurch gekennzeichnet, dass** die Phase des Prüfens (PV) einer Antwort, die folgenden Schritte aufweist:
• einen Schritt (ES1) des Empfangens durch das mobile Endgerät (S1) einer ersten Nachricht (MT1), die durch das elektronische Zahlungsterminal (T1) gesendet wird,
• einen Schritt (ES2) des Sendens durch das mobile Endgerät (S1) an das elektronische Zahlungsterminal (T1) einer Nachricht (MS1), die mindestens eine Challenge (CT1S1) aufweist,
• einen Schritt (ES3) des Empfangens durch das mobile Endgerät (S1) einer zweiten Nachricht (MCT1), die durch das elektronische Zahlungsterminal (T1) gesendet wird, wobei die zweite Nachricht (MCT1) eine Antwort (RT1) auf die Challenge (CT1S1) aufweist,
• einen Schritt (ES4) des Prüfens der Antwort (RT1) durch Vergleichen der Antwort (RT1) mit einer Referenzantwort (Rref), der ein negatives Prüfergebnis liefert, wenn der Vergleich negativ ist, wobei der Unterschritt des Prüfens von dem mobilen Endgerät (S1) durchgeführt wird.

3. Verfahren zum Erkennen eines betrügerischen elektronischen Zahlungsterminals nach Anspruch 1 oder 2, **dadurch gekennzeichnet, dass** es ferner einen Schritt (EA4) des Lokalisierens des betrügerischen elektronischen Zahlungsterminals (T1) aufweist und dadurch, dass der Schritt (ES5) des Erzeugens eines Alarms die Lokalisierung berücksichtigt.

4. Verfahren zum Erkennen eines betrügerischen elektronischen Zahlungsterminals nach einem der Ansprüche 1 bis 3, **dadurch gekennzeichnet, dass** der Schritt (ES5) des Erzeugens eines Alarms einen Schritt (EA3) des Sendens einer Warnnachricht an mindestens eine vorbestimmte Kommunikationsvorrichtung auslöst.

5. Verfahren zum Erkennen eines betrügerischen elektronischen Zahlungsterminals nach einem der Ansprüche 1 bis 4, **dadurch gekennzeichnet, dass** es auch einen Schritt (EA1) des Öffnens durch das mobile Endgerät (S1) einer gesicherten Anwendung des Erkennens eines betrügerischen elektronischen Zahlungsterminals aufweist.

6. Verfahren zum Erkennen eines betrügerischen elektronischen Zahlungsterminals nach Anspruch 1, **dadurch gekennzeichnet, dass** es die folgenden Schritte aufweist, die in einem authentischen elektronischen Zahlungsterminal (T2) durchgeführt werden:
• einen Schritt (EA5) des Sendens einer ersten Nachricht (MT2),
• einen Schritt (ET1) des Empfangens einer Nachricht (MS1), umfassend mindestens eine Challenge (CT2S1), wobei die Nachricht (MS1) von dem mobilen Endgerät (S1) gesendet wird,
• einen Schritt (ET2) des Erhaltens einer Antwort (RT2) auf die Challenge (CT2S1) und des Verschlüsselns der erhaltenen Antwort (RT2), wodurch ein Kryptogramm (CS1) ausgestellt wird,
• einen Schritt (ET3) des Sendens einer zweiten Nachricht (MCT2), umfassend mindestens das Kryptogramm (CS1), an das mobile Endgerät (S1).

7. Verfahren zum Erkennen eines betrügerischen elektronischen Zahlungsterminals nach Anspruch 6, **dadurch gekennzeichnet, dass** jede der ersten Nachrichten (MTi), die von einem elektronischen Zahlungsterminal (Ti) gesendet werden, Daten aufweist, die mit dem entsprechenden elektronischen Zahlungsterminal (Ti) verbunden werden, und dadurch, dass die Daten mindestens aufweisen:
• die universelle eindeutige Kennung (IDTi) des elektronischen Zahlungsterminals (Ti),
• die Seriennummer des elektronischen Zahlungsterminals (Ti),
• das Niveau des Bluetooth-Signals (NSBTi), das von dem mobilen Endgerät (S1) empfangen wird,
• eine Information (ITi), die die Fähigkeit des elektronischen Zahlungsterminals (Ti), herausgefordert zu werden, angibt.

8. Verfahren zum Erkennen eines betrügerischen elektronischen Zahlungsterminals nach Anspruch 6, **dadurch gekennzeichnet, dass** jede der zweiten Nachrichten (MCTi), die von einem elektronischen Zahlungsterminal (Ti) gesendet werden, Daten aufweist, die mit dem entsprechenden elektronischen Zahlungsterminal (Ti) und der entsprechenden Challenge (CTiSi) verbunden werden, und dadurch, dass die Daten mindestens aufweisen:
• eine verschlüsselte Antwort (CSi) auf die entsprechende Challenge (CTiSi),
• die authentische Seriennummer des elektronischen Zahlungsterminals (Ti),
• das Niveau des Bluetooth-Signals (NSBTi), das von dem mobilen Endgerät (S1) empfangen wird,
• mindestens eine Kontextinformation (ICi) der Nachricht (MCTi).

9. Mobiles Endgerät (S1), das die Schritte des Verfahrens zum Erkennen nach den Ansprüchen 1 bis 5 umsetzt, **dadurch gekennzeichnet, dass** es mindestens aufweist:
• Kommunikationsmittel (501), die geeignet sind, Nachrichten (MSi) zu senden und/oder zu empfangen,
• Mittel zum Verarbeiten (502, 602) der Daten, die in den Nachrichten (MTi, MCTi) enthalten sind,
• Mittel zum Erzeugen eines Alarms (503), der angibt, dass ein bestimmtes Zahlungsterminal betrügerisch ist, wenn sich mindestens ein Datum, das in der Nachricht (MCTi) enthalten ist, die von dem bestimmten Terminal (Ti) empfangen wird, von dem entsprechenden Referenzdatum unterscheidet.

10. Elektronisches Zahlungsterminal (Ti), das die Schritte des Verfahrens zum Erkennen nach den Ansprüchen 6 bis 8 umsetzt, **dadurch gekennzeichnet, dass** es aufweist:
• Kommunikationsmittel (601), die geeignet sind, Nachrichten (MTi, MCTi) zu senden und/oder zu empfangen,
• Mittel zum Verarbeiten (602) der Daten, die in den Nachrichten (MSi) enthalten sind.

11. Computerprogramm, das von einem Kommunikationsnetz herunterladbar ist und/oder auf einem computerlesbaren Träger gespeichert ist und/oder von einem Mikroprozessor ausführbar ist, umfassend Programmcodebefehle für die Ausführung der Schritte des Verfahrens zum Erkennen eines betrügerischen elektronischen Zahlungsterminals nach einem der Ansprüche 1 bis 8, wenn das Programm auf einem Computer ausgeführt wird.

12. Computerlesbares Aufzeichnungsmedium, auf dem ein Computerprogramm aufgezeichnet ist, das einen Satz an Befehlen aufweist, die von einem Computer oder einem Prozessor ausführbar sind, um das Verfahren zum Erkennen eines betrügerischen elektronischen Zahlungsterminals nach mindestens einem der Ansprüche 1 bis 8 auszuführen.

## Claims

1. Method for detecting a fraudulent electronic payment terminal (T1) **characterized in that** it comprises a step (ES5), implemented by a mobile terminal (S1) prior to the use of said fraudulent electronic payment terminal for a payment transaction, for generating an alarm indicating that said electronic payment terminal (T1) is fraudulent, said step (ES5) for generating an alarm being activated:
• when no message coming from the electronic payment terminal (T1) is received by the mobile terminal (S1) before the expiry of a predetermined timeout period; or
• when a phase (PV) of verifying a response, received from said electronic payment terminal (T1), to a challenge (CT1S1) sent out by said mobile terminal (S1), delivers a negative verification result, said step of verification being implemented by said mobile terminal (S1).

2. Method for detecting a fraudulent electronic payment terminal according to claim 1, **characterized in that** said phase for verifying (PV) a response comprises the following steps:
• a step (ES1) for the reception, by said mobile terminal, of a first message (MT1) sent out by said electronic payment terminal (T1);
• a step (ES2) for the sending, by said mobile terminal (S1), to said electronic payment terminal (T1), of a message (MS1) comprising at least one challenge (CT1S1);
• a step (ES3) of reception, by said mobile terminal (S1), of a second message (MCT1) sent by said electronic payment terminal (T1), said second message (MCT1) comprising a response (RT1) to the challenge (CT1S1);
• a step (ES4) of verification of the response (RT1) by comparison of said response (RT1) with a reference response (Rref), delivering a negative verification result when said comparison is negative, said step of verification being implemented by said mobile terminal (S1).

3. Method for detecting a fraudulent electronic payment terminal according to claim 1 or claim 2, **characterized in that** it further comprises a step (EA4) for locating said fraudulent electronic payment terminal (T1), and **in that** said step (ES5) for generating an alarm takes account of said location.

4. Method for detecting a fraudulent electronic terminal according to any one of the claims 1 to 3, **characterized in that** said step (ES5) for generating an alarm activates a step (EA3), for sending a warning message to at least one predetermined communications device.

5. Method for detecting a fraudulent electronic terminal according to any one of the claims 1 to 4, **characterized in that** it also comprises a step (EA1) for the opening, by the mobile terminal (S1), of a secured application for detecting a fraudulent electronic payment terminal.

6. Method for detecting a fraudulent electronic payment terminal according to claim 1, **characterized in that** it comprises the following steps implemented in an authentic electronic payment terminal (T2):
• a step (EA5) for sending out a first message (MT2);
• a step (ET1) for receiving a message (MS1) comprising at least one challenge (CT2S1), said message (MS1) being sent out by said mobile terminal (S1);
• a step (ET2) for obtaining a response (RT2) to said challenge (CT2S1) and for encrypting said response (RT2) obtained, delivering a cryptogram (CS1) ;
• a step (ET3) for sending a second message (MCT2) comprising at least said cryptogram (CS1), to said mobile terminal (S1).

7. Method for detecting a fraudulent electronic payment terminal according to claim 6, **characterized in that** each of said first messages (MTi), sent out by an electronic payment terminal (Ti), comprises data associated with the corresponding electronic payment terminal (Ti) and **in that** said data comprises at least:
• the unique universal identifier (IDTi) of said electronic payment terminal (Ti) ;
• the serial number of said electronic payment terminal (Ti) ;
• the level of the Bluetooth signal received (NSBTi) by said mobile terminal (S1) ;
• a piece of information (ITi) stating the capacity of the electronic payment terminal to be challenged.

8. Method for detecting a fraudulent electronic payment terminal according to claim 6, **characterized in that** each of said second messages (MCTi), sent out by an electronic payment terminal (Ti), comprises data associated with said electronic payment terminal (Ti) and with the corresponding challenge (CTiSi), and **in that** said data comprises at least:
• an encrypted response (CSi) to the corresponding challenge (CTiSi);
• the authentic serial number of said electronic payment terminal (Ti) ;
• the level of the Bluetooth signal (NSBTi) received by said mobile terminal (S1) ;
• at least one piece of information on the context (ICi) of said message (MCTi).

9. Mobile terminal (Si) implementing the steps of the method for detecting according to the claims 1 to 5, **characterized in that** it comprises at least:
• means of communication (501) capable of sending out and/or receiving messages (MSi);
• means for processing (502, 602) data contained in the messages (MTi, MCTi) ;
• means for generating an alarm (503), indicating that a given payment terminal is fraudulent, when at least one piece of data contained in said message (MCTi) received from said given terminal (Ti) is different from the corresponding piece of reference data.

10. Electronic payment terminal (Ti) implementing the steps of the method for detecting according to the claims 6 to 8, **characterized in that** it comprises:
• communications means (601) capable of sending and/or receiving messages (MTi, MCTi);
• means (602) for processing the data contained in the messages (MSi).

11. Computer program product downloadable from a communications network and/or stored on a computer-readable carrier and/or executable by a microprocessor, comprising program code instructions to execute the steps of the method for detecting a fraudulent electronic payment terminal according to any one of the claims 1 to 8 when said program is executed on a computer.

12. Computer-readable recording carrier on which there is recorded a computer program comprising a set of instructions executable by a computer or a processor to implement the method for detecting a fraudulent electronic payment terminal according to at least one of the claims 1 to 8.
